# EUROPEAN PATENT APPLICATION

(11) **EP 3 550 392 A1**
(43) Date of publication of application: **09.10.2019**
(21) Application number: 19166189.1
(22) Date of filing: 29.03.2019
(51) Int. Cl.: G05D 1/00

(54) **COMPUTER SYSTEM AND COMPUTER PROGRAM**

(30) Priority: 30.03.2018 JP 2018069761
(71) Applicant: Nidec-Shimpo Corporation, Nagaokakyo-city, Kyoto 617-0833 (JP)
(72) Inventor: SATO, Syunta, Nagaokakyo-city, Kyoto 617-0833 (JP)
(74) Representative: Viering, Jentschura & Partner mbB Patent- und Rechtsanwälte

(57) **Abstract**

A computer system for creating a path for a vehicle includes: a processor; a memory configured to store a computer program that controls an operation of the processor; an input device configured to accept an operation by a user; and a display device. In accordance with the computer program, the processor displays, on the display device, a map of a space where the vehicle moves, accepts, from the input device, designation of the k-th (k: an integer satisfying 1≤k≤N-1, N: an integer not less than 2) point and the (k+1)-th point on the map corresponding to passing points of the vehicle, and generates, in response to the acceptance, a composite statement which is a computer-interpretable statement and where a movement permission condition concerning a path k connecting the k-th point and the (k+1)-th point is defined.

## Description

### BACKGROUND

### 1. Technical Field:

The present disclosure relates to a computer system and a computer program.

### 2. Description of the Related Art:

Development of a navigation management system that controls the movement of an automated guided vehicle is under way. An automated guided vehicle is sometimes called an "AGV". Japanese Laid-Open Patent Publication No. H07-281750 and Japanese Laid-Open Patent Publication No. H08-211937 each disclose a technique of managing the navigation of a vehicle such as an automatic guided vehicle.

As the traveling paths of AGVs have become complicated, a PC and a PLC (Programmable Logic Controller) for navigation management have become necessary for the navigation management system. A PLC is a device inside which a multiplicity of relays, a timer and the like are provided, and is capable of freely interconnecting or disconnecting the relays, the timer and the like with a program. By creating a program in accordance with the navigation contents of an AGV, the navigation of the AGV can be controlled. Further, by appropriately switching the program, changes of navigation contents can be comparatively easily handled.

A PLC includes an input-output interface. The PLC is connected to controlled devices on the traveling path, e.g., an elevator and a sheet shutter, through the input-output interface. The PLC is capable of receiving signals from the controlled devices by using the program, and outputting signals to control the controlled devices.

As described above, in applications where a plurality of AGVs are navigated in parallel and their traveling route(s) is changed as appropriate, the use of a PLC has been suitable. In recent years, it has been virtually essential to use a PLC for the navigation management of AGVs.

### SUMMARY

When the navigation contents of each AGV are created, it is necessary for a human navigation manager to not only provide a PC for navigation management purposes but also a PLC. In addition, it is necessary to separately purchase and/or construct a program development environment and acquire knowledge to create a program. Introduction of the system requires not only a monetary cost but also a human cost to create and edit the program.

A non-limiting and illustrative embodiment of the present disclosure provides an environment for easily and quickly setting and editing navigation contents for an AGV.

A computer system of the present disclosure is, in an illustrative embodiment, a computer system for creating a path for a vehicle which computer system includes: a processor; a memory storing a computer program that controls an operation of the processor; an input device that accepts an operation by a user; and a display device, in accordance with the computer program, the processor (a) displays, on the display device, a map of a space where the vehicle moves, (b) accepts, from the input device, designation of a k-th (k: an integer satisfying 1≤k≤N-1, N: an integer not less than 2) point and a (k+1)-th point on the map corresponding to passing points of the vehicle, and (c) generates, in response to the acceptance, a composite statement which is a set of computer-interpretable statements and in which a movement permission condition concerning a path k connecting the k-th point and the (k+1)-th point is defined.

With a computer system according to one aspect of the present disclosure, the user designates two points corresponding to the passing points of a vehicle through the input device, while viewing a map of the space displayed on the display device. In response to acceptance of the designation, the processor of the computer system generates a computer-interpretable statement in which a movement permission condition concerning a path connecting the two points is defined. Creation of the movement permission condition, which would have required manual inputs in a conventional system having a PC and a PLC, can be automatized, and thus the navigation contents for the AGV can be easily and quickly created.

### BRIEF DESCRIPTION OF THE DRAWINGS

FIG. **1** is a view showing an overview of a management system **100** according to the present disclosure.
FIG. **2** is a view showing an example in which a user 3 causes an AGV **10** to travel by using a tablet computer **4.**
FIG. **3** is an external view of an illustrative AGV **10** according to an illustrative embodiment.
FIG. **4** is a view showing a hardware configuration of the AGV **10.**
FIG. **5** is a view showing pieces of data of the own position (x, y, θ) of the AGV **10** and the reliability displayed on an screen area **7** of the tablet computer **4.**
FIG. **6** is a view showing a hardware configuration of a travel management device **20.**
FIG. **7** is a view showing an example of an image **60** displayed on a monitor **30** when the travel management device **20** is started.
FIG. **8** is a view showing an example of an image **110** displayed on the monitor **30** after a button object **63c** (FIG. **7**) is selected.
FIG. **9** is a view showing an example of marker objects **116a, 116b** and **116c** indicated at the positions **114a, 114b** and **114c** selected by the user **3,** respectively.
FIG. **10** is a view showing an example of a first image **120** displayed on the monitor **30** after a button object **63d** (FIG. **7****)** is selected.
FIG. **11** is a view showing an example of a second image **130** displayed on the monitor **30** after the button object **63d** (FIG. **7**) is selected.
FIG. **12A** is a view showing a traveling path of the AGV **10** when the AGV **10** travels in a straight line.
FIG. **12B** is a view showing a traveling path of the AGV **10** when the AGV **10** turns left at a position **Mₙ₊₁** and moves toward a position **Mₙ₊₂.**
FIG. **12C** is a view showing a traveling path of the AGV **10** when the AGV **10** moves in an arc-shaped line from the position **Mₙ₊₁** to the position **Mₙ₊₂.**
FIG. **13** is a view showing an example of marker objects **118a** to **118d** respectively displayed in positions designated by the user in sequence.
FIG. **14** is a view showing an example in which the marker objects **118a** and **118b** are displayed according to the user's designation, and thereafter a path **R0001** is set by the program.
FIG. **15A** is a view showing an example of a movement permission condition (composite statement) that is set according to the program.
FIG. **15B** is a view showing an example of a ladder diagram generated based on the composite statement of FIG. **15A** and displayed on the monitor **30.**
FIG. **16** is a view showing an example in which the marker object **118c** is further displayed according to the user's designation, and thereafter a path of an identifier "R0002" is set by the program.
FIG. **17** is a view showing an example of the ladder diagram, displayed on the monitor **30,** where the movement permission condition concerning the traveling path **R0002** is defined.
FIG. **18** is a ladder diagram where the movement permission condition to sequentially move the four marker objects shown in FIG. **13** is described.
FIG. **19** is an operation flowchart of the travel management device **20** performed by the program according to the illustrative embodiment.
FIG. **20** is a view showing an example of four traveling paths **R0011** to **R0014** passing three marker objects **M₀₀** to **M₀₂.**

### DETAILED DESCRIPTION

Hereinafter, an example of a management system including a vehicle and a travel management device according to the present disclosure will be described with reference to the attached drawings. In the present specification, an automated guided vehicle (AGV) is described as an example of the vehicle.

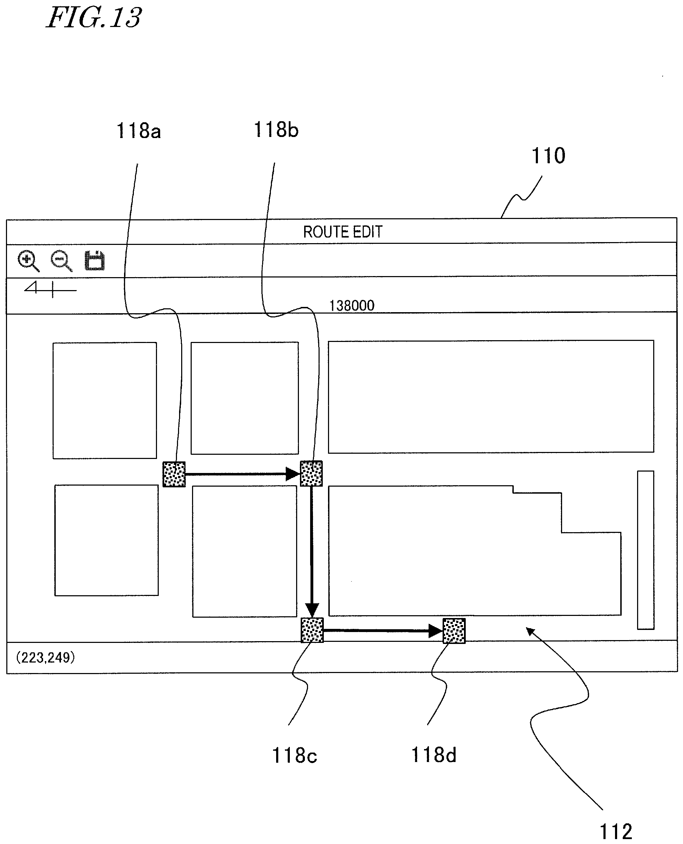

In a management system that manages the travel of AGVs according to the present embodiment, when the operation of each AGV is controlled, it is not essential to use a PLC. Details thereof will be specifically described with reference to FIG. **13** and subsequent figures.

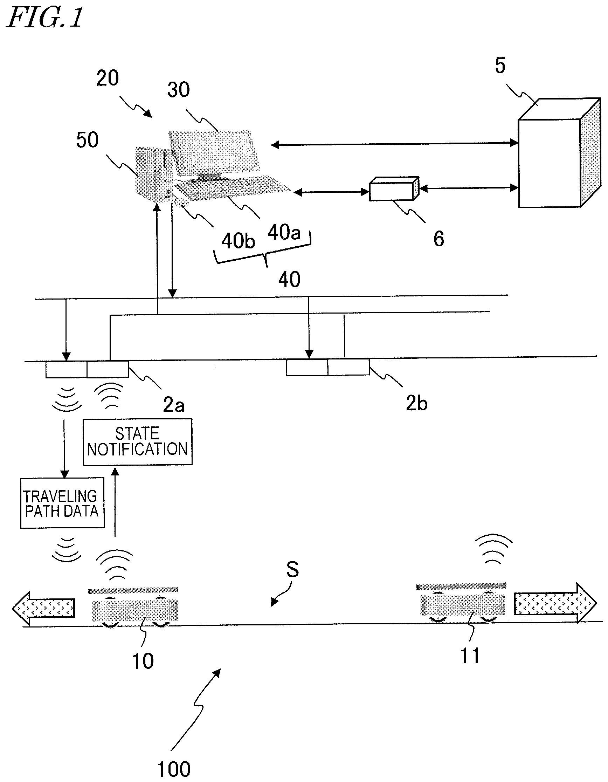

FIG. **1** shows an overview of the management system **100** according to the present disclosure. In the illustrated example, AGVs **10** and **11** have map data, and travel while recognizing at which position they are traveling now. The AGVs **10** and **11** each receive traveling path data transmitted from a travel management device **20,** and travel in a space **S** in accordance with the traveling path data. The AGVs **10** and **11** each move by driving a plurality of internal motors to rotate wheels (drive wheels) that are connected to the motors so as to travel along the traveling path. The traveling path data is wirelessly transmitted from the travel management device **20** to the AGVs **10** and **11.** Communication between the AGV **10** and the travel management device **20** and communication between the AGV **11** and the travel management device **20** are each performed by using radio access points **2a** and **2b** provided in the neighborhood of the ceiling of a factory. The communications conform to, for example, any of the Wi-Fi (R) standards. The number of radio access points may be arbitrary.

While two AGVs **10** and **11** are shown in FIG. **1****,** the number of AGVs may be one, or may be three, four, or five or more. The travel management device **20** generates the traveling path data for each AGV, and transmits it to each AGV.

The AGVs managed by the travel management device **20** are, for example, AGVs which have been registered in the travel management device **20** by a user. As used herein, the state of being "managed" encompasses not only the above-described management of the traveling path, but also navigation management of each AGV, management of states such as a traveling state and a stopped state, management of an error history, and management of a traveling path history.

In the following description, description will be given by taking the AGV **10** as an example. The following description is similarly applicable also to the AGV **11** and other AGVs (not shown).

An overview of an operation of the management system **100** is as follows: The management system **100** includes at least one AGV **10** and the travel management device **20,** and manages the travel of the AGV **10** by using the travel management device **20.**

The travel management device **20** includes a monitor **30** as an image display device, a keyboard **40a** and a mouse **40b** as input devices with which to accept the user's operations, and a PC **50.** The keyboard **40a** and/or the mouse **40b** are devices that accept designation of a plurality of positions on the monitor **30** from the user. In the present specification, the keyboard **40a** and the mouse **40b** are collectively referred to as the "input device **40".** As described later, the PC **50** includes a CPU (Central Processing Unit) as a signal processing circuit, an image processing circuit that generates an image displayed on the monitor **30,** and a communication circuit. Generally, the monitor **30,** the keyboard **40a** and the mouse **40b,** and the PC **50** are, as a whole, referred to as a "PC" or "computer system". The travel management device **20** shown in FIG. **1** may be called a "management PC" or "management computer". The management PC may be a laptop PC.

On the monitor **30,** a planar map image of the space **S** obtained through a data terminal (not shown) may be displayed. The user can specify a position on the planar map image of the space **S** as a traveling via-point of the AGV **10.**

The image processing circuit generates an image including a plurality of marker objects representing a plurality of positions. An image of a marker object may be, for example, "■". Specific examples will be described later. The images of the marker objects may be additionally displayed on the image on the monitor **30** every time a position is designated, or may be collectively displayed on the monitor **30** after the user performs an operation to complete designation after a plurality of positions are designated. In the present specification, placing an image of a marker object onto the planar map image will be sometimes called "disposing a marker". Moreover, information concerning the attributes of a marker object (described later) will be sometimes referred to as "marker attribute information".

The CPU **21** converts the coordinates of each marker object on the image to coordinates in the space **S** where the AGV **10** travels. At this time, the CPU converts the line segments or the curved lines on the monitor **30** connecting a plurality of marker objects to a path in the space **S,** and sets them as a traveling path for the AGV **10.** The communication circuit transmits data representing the traveling path to the AGV **10.**

The AGV **10** includes a communication circuit, and receives data representing the traveling path from the travel management device **20.** The AGV **10** further includes a plurality of motors, a plurality of drive wheels respectively connected to the motors, driving devices for the respective motors, and a control circuit. When the control circuit generates a control signal for causing the AGV **10** to travel along the traveling path, e.g., a PWM signal, the driving devices independently control the voltages applied to the motors in accordance with the PWM signal. This causes the motors to rotate so that the AGV **10** moves along the traveling path received from the travel management device **20.**

The travel management device **20** may be communicably connected to an external system **5.** The travel management device **20** is capable of performing a serial communication conforming to the Ethernet (R) standard with the external system **5.** Alternatively, the travel management device **20** may communicate with the external system **5** through a PLC communication terminal **6.** At this time, a serial communication conforming to the Ethernet (R) standard may be performed between the travel management device **20** and the PLC communication terminal **6,** and a serial communication using a power line may be performed between the PLC communication terminal **6** and the external system **5.**

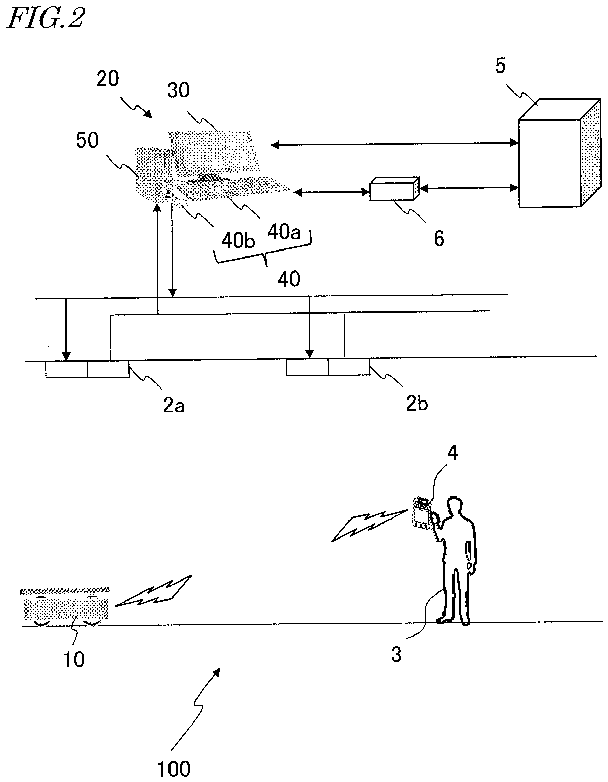

FIG. **1** shows an example in which the travel management device **20** transmits information of a traveling path to the AGV **10** to thereby manage the travel of the AGV **10.** However, the user may directly operate the AGV **10** by using a communication terminal, e.g., a tablet computer. FIG. **2** shows an example in which the user **3** causes the AGV **10** to travel by using a tablet computer **4.** The tablet computer **4** and the AGV **10** may be connected e.g. one-to-one to perform a communication conforming to the Bluetooth (R) standard, or may perform a communication conforming to the Wi-Fi (R) standard through the radio access points **2a** and **2b** or the like.

When the AGV **10** is directly operated by using the tablet computer **4,** even if the traveling path data is received from the travel management device **20,** the AGV **10** travels in accordance with the operation made by the user **3.** While the connection with the tablet computer **4** is disconnected, the AGV **10** can travel in accordance with the traveling path data received from the travel management device **20.**

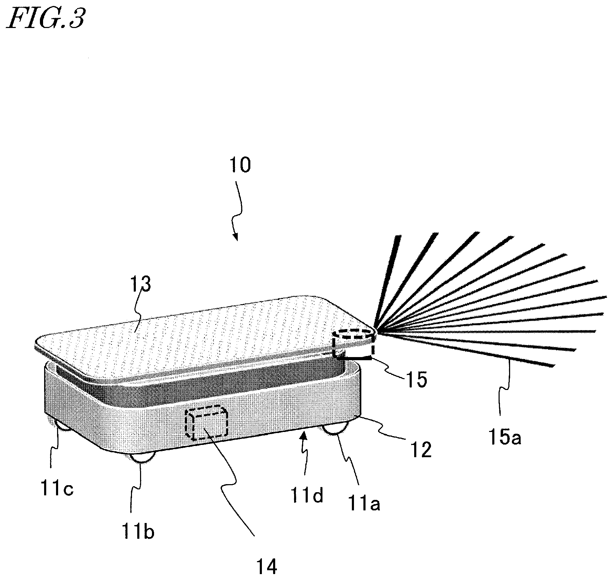

Next, referring to FIG. **3** to FIG. **6****,** the structure of the AGV **10** and the travel management device **20** will be described.

FIG. **3** is an external view of an illustrative AGV **10** according to the present embodiment. The AGV **10** includes four wheels **11a** to **11d,** a frame **12,** a carrying table **13,** a travel control device **14** and a laser range finder **15.** Although the AGV **10** also includes a plurality of motors, they are not shown in FIG. **3****.** Moreover, although the front wheel **11a,** the rear wheel **11b** and the rear wheel **11c** are shown in FIG. **3****,** the front wheel **11d** which is obscured behind the frame **12** is not clearly shown.

The travel control device **14** is a device that controls the operation of the AGV **10,** and mainly includes an integrated circuit including an MCU (described later), electronic parts and a circuit board on which these are mounted. The travel control device **14** performs the above-described data transmission and reception to/from the travel management device **20,** and a preprocessing operation.

The laser range finder **15** is an optical device that measures a distance to a target, for example, by applying infrared laser light **15a** to the target and detecting the reflected light of the laser light **15a.** In the present embodiment, the laser range finder **15** of the AGV **10** emits the pulsed laser light **15a** while changing the direction every 0.25 degrees, for example, in a space spanning a range of 135 degrees on the left and right sides (a total of 270 degrees) of e.g. the front of the AGV **10,** and detects the reflected light of each laser light **15a.** This provides data of distance to the reflection point in directions determined by a total of 1081 steps of angle in every 0.25 degrees..

From the position and attitude of the AGV **10** and the result of scanning by the laser range finder **15,** the disposition of the objects around the AGV can be obtained. Generally speaking, the position and attitude of a vehicle are referred to a pose. The position and attitude of a vehicle within a two-dimensional surface are expressed by positional coordinates (x, y) in an XY orthogonal coordinate system and an angle θ to the X axis. Hereinafter, the position and attitude, that is, the pose (x, y, θ) of the AGV **10** may simply be referred to as "position".

The position of a reflection point as viewed from the position at which the laser light **15a** is emitted can be expressed by using polar coordinates that are defined in terms of angle and distance. In this embodiment, the laser range finder **15** outputs sensor data that is expressed in polar coordinates. However, the laser range finder **15** may convert a position that is expressed in polar coordinates into a position expressed in Cartesian coordinates, and may output the converted position data.

Since the structure and operation principles a laser range finder are well-known, any more detailed description thereof will be omitted in the present specification. Examples of objects that can be detected by the laser range finder **15** include humans, cargo, shelves, and walls.

The laser range finder **15** is an example of an external sensor that acquires sensor data by sensing the area therearound. Other examples of such external sensors include image sensors and ultrasonic sensors.

The travel control device **14** can estimate the current position of the device itself by comparing the measurement results of the laser range finder **15** with the map data stored in itself. The map data may be obtained by the AGV **10** itself by using the SLAM (Simultaneous Localization and Mapping) technique.

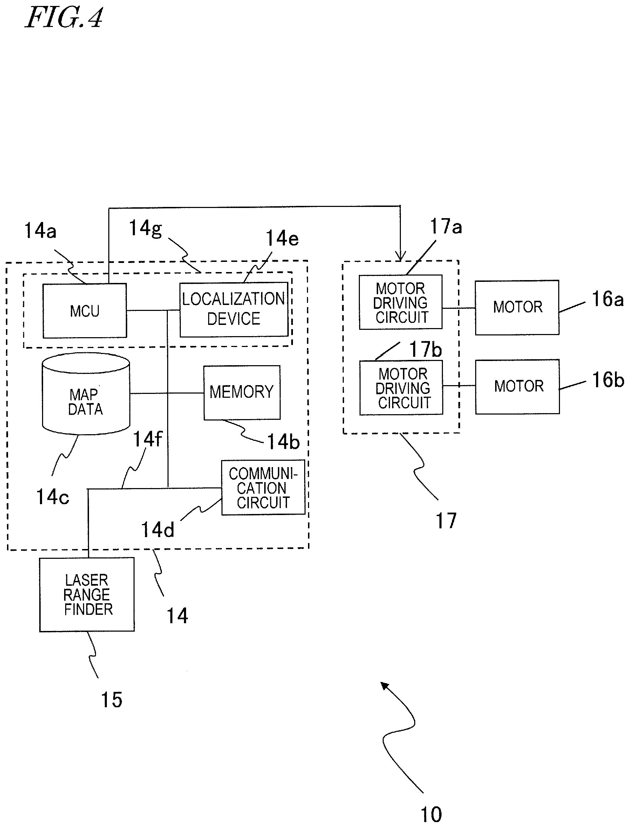

FIG. **4** shows the hardware configuration of the AGV **10.** FIG. **4** also shows a specific structure of the travel control device **14.**

The AGV **10** includes the travel control device **14,** the laser range finder **15,** two motors **16a** and **16b,** and a driving device **17.**

The travel control device **14** includes an MCU **14a,** a memory **14b,** a storage device **14c,** a communication circuit **14d** and a localization device **14e.** The MCU **14a,** the memory **14b,** the storage device **14c,** the communication circuit **14d** and the localization device **14e** are connected by a communication bus **14f,** and are capable of transmitting and receiving data to/from one another. Moreover, the laser range finder **15** is also connected to the communication bus **14f** through a communication interface (not shown), and transmits the measurement data as the measurement result to the MCU **14a,** the localization device **14e** and/or the memory **14b.**

The MCU **14a** is a processor or a control circuit (computer) that performs an operation for controlling the whole of the AGV **10** including the travel control device **14.** Typically, the MCU **14a** is a semiconductor integrated circuit. The MCU **14a** transmits a PWM (Pulse Width Modulation) signal as a control signal to the driving device **17** to control the driving device **17** and causes it to adjust the voltages applied to the motors. As a result, the motors **16a** and **16b** each rotate at a desired rotation speed.

The memory **14b** is a volatile storage device that stores a computer program executed by the MCU **14a.** The memory **14b** is usable as a work memory when the MCU **14a** and the localization device **14e** perform an operation.

The storage device **14c** is a non-volatile semiconductor memory that stores the map data. However, the storage device **14c** may be a magnetic recording medium typified by a hard disk or an optical recording medium typified by an optical disc. Further, the storage device **14c** may include a head device for writing and/or reading data to and/or from any of the recording media, and a control device for the head device. In the present embodiment, the map data is obtained prior to the start of the travel of the AGV **10** and stored in the storage device **14c.**

The communication circuit **14d** is a radio communication circuit that performs radio communication conforming to, for example, the Bluetooth (R) and/or the Wi-Fi (R) standard. Either of such standards include radio communication standards in which a 2.4 GHz frequency band is used.

The localization device **14e** receives the sensor data from the laser range finder **15,** and reads out the map data stored in the storage device **14c.** By matching the local map data created from the result of scanning by the laser range finder **15** against environment map data of a wider range, the localization device **14e** identifies its own position (x, y, θ) on the environment map. The localization device **14e** generates "reliability" representing the degree of coincidence of the local map data with the environment map data. Pieces of data of the own position (x, y, θ) and the reliability can be transmitted from the AGV **10** to the travel management device **20** and/or the tablet computer **4.**

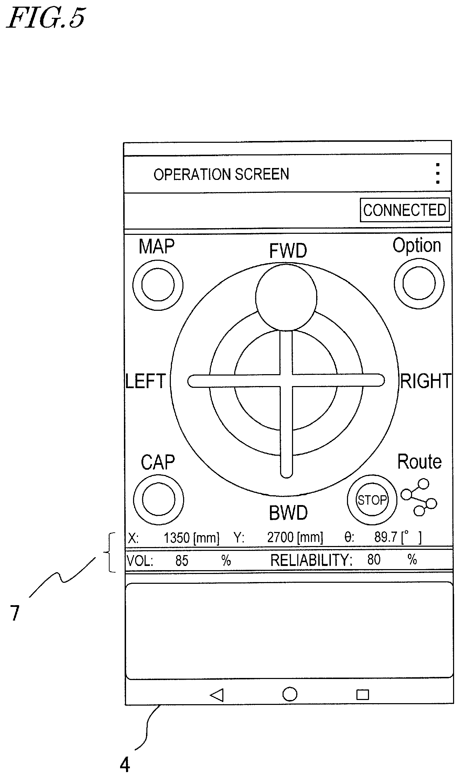

For example, the tablet computer **4** receives the pieces of data of the own position (x, y, θ) and the reliability, and displays them on an internal display device. FIG. **5** shows the pieces of data of the own position (x, y, θ) of the AGV **10** and the reliability displayed on an screen area **7** of the tablet computer **4.**

While the MCU **14a** and the localization device **14e** are illustrated as separate components in the present embodiment, this is an example. They may be a one-chip circuit or a semiconductor integrated circuit capable of independently performing the operations of the MCU **14a** and the localization device **14e.** FIG. **4** shows a chip circuit 14g including the MCU **14a** and the localization device **14e.** In the present disclosure, the MCU **14a,** the localization device **14e** and/or the chip circuit 14g are sometimes called a computer or a signal processing circuit. Hereinafter, description will be directed to an example where the MCU **14a** and the localization device **14e** are separately and independently provided.

The two motors **16a** and **16b** are attached to the two wheels **11b** and **11c** to rotate the respective wheels. That is, the two wheels **11b** and **11c** are drive wheels.

The driving device **17** includes motor driving circuits **17a** and **17b** for adjusting the voltages applied to the two motors **16a** and **16b,** respectively. The motor driving circuits **17a** and **17b** are both so-called inverter circuits, and turn on or off the current flowing through the motors by the PWM signal transmitted from the MCU **14a,** thereby adjusting the voltages applied to the motors.

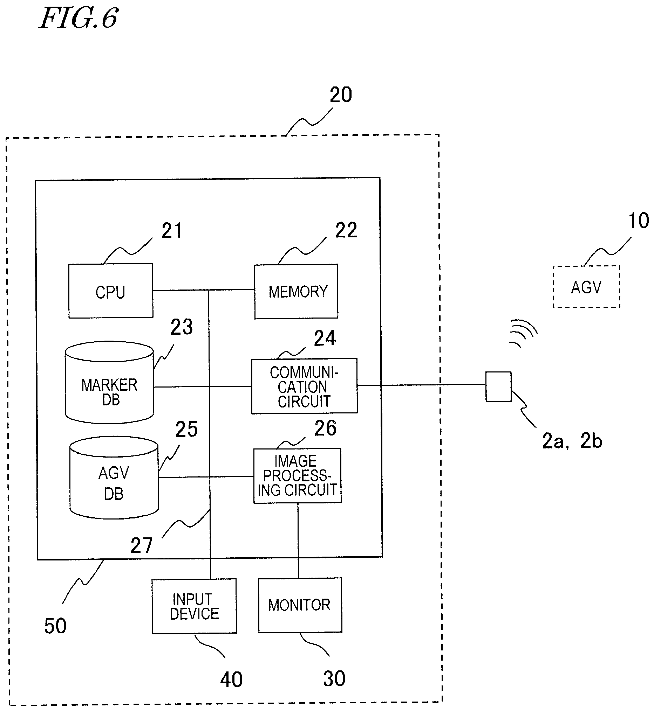

FIG. **6** shows the hardware configuration of the travel management device **20.** As described above, the travel management device **20** includes the monitor **30,** the input device **40** such as the keyboard **40a** and the mouse **40b,** and the PC **50.**

The PC **50** includes the CPU **21,** a memory **22,** a maker database (marker DB) **23,** a communication circuit **24,** an AGV database (AGV DB) **25** and an image processing circuit **26.** The CPU **21,** the memory **22,** the marker DB **23,** the communication circuit **24** and the image processing circuit **26** are connected by a communication bus **27,** and are capable of transmitting and receiving data to/from one another.

The CPU **21** is a signal processing circuit (computer) that controls the operation of the travel management device **20.** Typically, the CPU **21** is a semiconductor integrated circuit.

The memory **22** is a volatile storage device that stores a computer program executed by the CPU **21.** The memory **22** is usable as the work memory when the CPU **21** performs computing. The computer program may be stored in a non-volatile storage device (not shown), e.g., an EEPROM. The CPU **21** reads the computer program from the non-volatile storage device when the PC **50** is started, and expands it to the memory **22** to execute it.

The marker DB **23** stores information of a position(s) on the image designated by the user. In the present disclosure, a marker object is to be disposed at a position on the image designated by the user **3.** The marker DB **23** stores various pieces of data related to the marker objects. The marker DB **23** holds a rule that associates positions on the image with coordinates in the space **S** where the AGV **10** travels. The rule may be held in the memory **22.** The marker DB **23** may be constructed on a non-volatile semiconductor memory or may be constructed on a magnetic recording medium such as a hard disk, or an optical recording medium such as an optical disc.

The communication circuit **24** performs wired communication conforming to, for example, the Ethernet (R) standard. The communication circuit **24** is connected to the radio access points **2a, 2b** and the like by wire, and is capable of communicating with the AGV **10** through the radio access points **2a, 2b** and the like. The communication circuit **24** receives data to be transmitted to the AGV **10,** from the CPU **21** through the bus **27.** Moreover, the communication circuit **24** transmits data (notification) received from the AGV **10** to the CPU **21** and/or the memory **22** through the bus **27.**

The AGV DB **25** stores data of the state of each AGV **10.** The AGV DB **25** can be updated by receiving data from each AGV **10,** and can also be updated by a case where the traveling path is generated by the CPU **21.**

The image processing circuit **26** is a circuit that generates an image displayed on the monitor **30.** The image processing circuit **26** operates exclusively when the user 3 operates the travel management device **20.** The monitor **30** and/or the input device **40** may be integrated with the travel management device **20.** Moreover, the processing of the image processing circuit **26** may be performed by the CPU **21.**

The marker DB **23** and the AGV DB **25** may be the data stored in the storage device itself or may be a combination of a computer program functioning as a database server and data. Alternatively, the marker DB **23** and the AGV DB **25** may be a combination of hardware functioning as a database server and data.

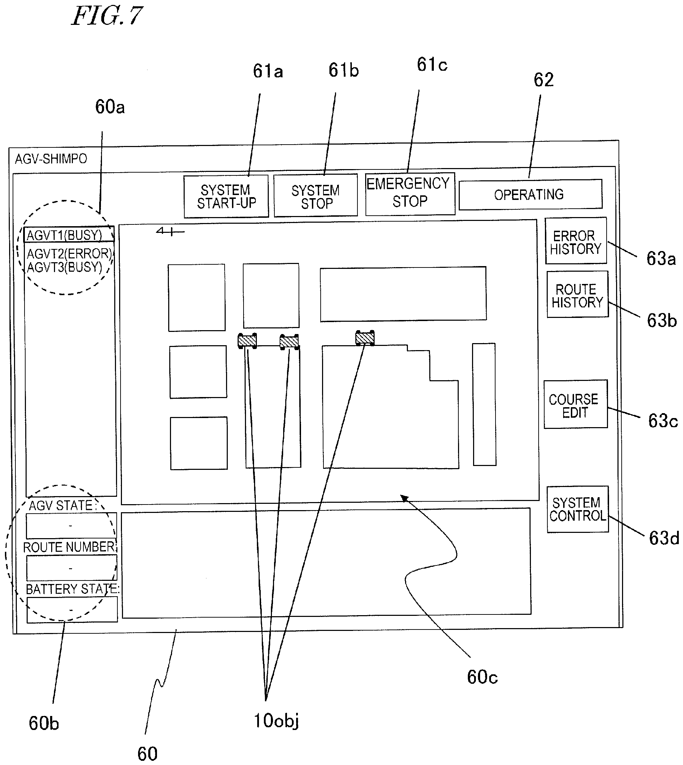

Next, the operation of the travel management device **20** will be described with reference to an example of images displayed on the monitor **30** which example is shown in FIG. **7** to FIG. **9****.** The CPU **21** of the travel management device **20** executes the computer program stored in the memory **22** to thereby operate in accordance with the user's operation, generates the images described below, and displays them on the monitor **30.**

FIG. **7** shows an example of an image **60** displayed on the monitor **30** when the travel management device **20** is started.

The image **60** has a list area **60a,** a state display area **60b** and a navigation monitor area **60c.** In the list area **60a,** the AGVs **10** placed under management of the management system **100** by being registered by the user **3** are displayed. In the state display area **60b,** the state of the selected AGV **10** is displayed. An example of a "state" is whether the AGV **10** is currently in a traveling state or a stopped state, whether an error exists or not, a number to identify the currently-set traveling path, or the remaining power of the battery.

In the navigation monitor area **60c,** a planar map image of the space **S** where the AGV **10** travels is displayed. The travel management device **20** obtains the image through a data terminal (not shown), incorporates it into the image **60,** and displays it. On the planar map image, objects **10obj** representing the respective positions of the AGVs **10** displayed in the list area **60a** are indicated. As a result, the user **3** can grasp the current position in the space **S,** and the current state, of each AGV **10.**

The image **60** further includes a plurality of button objects **61a** to **61c** and **63a** to **63d.** When the user **3** selects a specific button object, the CPU **21** executes the processing associated with the button object, and the image processing circuit **26** generates a new image showing a result of the processing and displays it. The selection of the button object is achieved, for example, by the user moving a cursor onto a button object by using the mouse **40b** and clicking on the button of the mouse **40b.** Alternatively, it is achieved by the user moving a cursor onto the button object by using an up/down/right/left key of the keyboard **40a** and depressing the enter button of the keyboard **40a.**

The button objects **61a** to **61c** are provided for the start, stop and emergency stop of the management system **100.** In an area **62** of the image **60,** the current state of the management system **100** is displayed. In the illustrated example, it is shown that the system is currently operating.

The button objects **63a** to **63d** are each provided to perform display of an error history of the selected AGV **10,** display of a route history thereof, editing of the course as the traveling path, and setting of the operation. Hereinafter, the operation of the travel management device **20** when the button object **63c** related to the edit of the course is selected will be described.

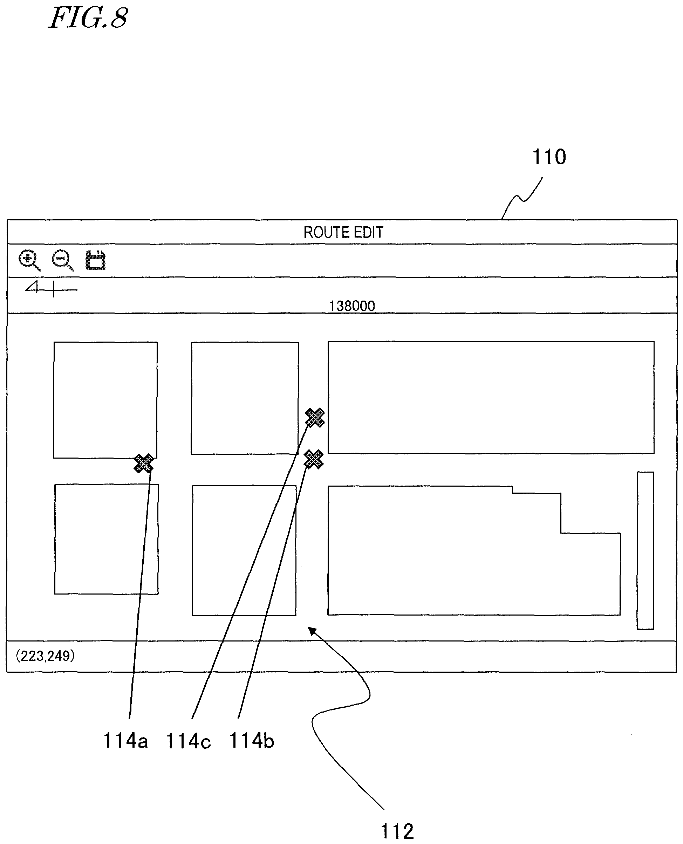

FIG. **8** shows an example of an image **110** displayed on the monitor **30** after the button object **63c** (FIG. **7**) is selected. In the illustrated example, a planar map image **112** of the space **S** where the AGV **10** travels is displayed in the image **110.** The user **3** can determine a traveling path for the selected AGV **10** by designating positions with the input device **40** on the planar map image **112.** In FIG. **8****,** three positions **114a, 114b** and **114c** designated by the user are shown by "X". The user **3** can correct the positions indicated by "X", if necessary.

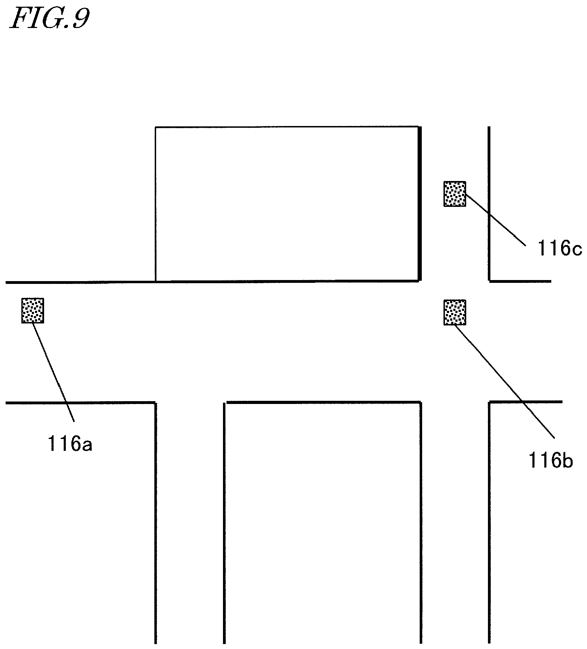

It is assumed that the user **3** designates the positions **114a, 114b** and **114c** in this order on the planar map image **112.** Thereafter, when the user **3** selects a button object (not shown) indicating that the position designation is ended, the CPU **21** transmits to the image processing circuit **26** the coordinates of the positions **114a, 114b** and **114c** and an instruction to display marker objects at the designated coordinates. In response to reception of the instruction, the image processing circuit **26** generates an image in which marker objects are indicated at the positions selected by the user **3.** FIG. **9** shows an example of marker objects **116a, 116b** and **116c** indicated at the positions **114a, 114b** and **114c** (FIG. **8**) selected by the user **3,** respectively. While the shape of each marker object is "■" in the present embodiment, the shape may be arbitrary.

The CPU **21** decides the traveling path so that the AGV **10** will travel through the coordinate positions in the space **S** corresponding to the positions of the marker objects **116a, 116b** and **116c,** in the order designated by the user **3.** Specifically, the CPU **21** determines a path by which the AGV **10** heads from the position **114a** toward the position **114b,** and after reaching the position **114b,** heads toward the position **114c.** The path may be either a straight line or a curved line. The CPU **21** converts the positions of the marker objects and the path on the image, respectively, into coordinates and a traveling path in the space **S.** For purposes of illustration, coordinates in the space **S** as converted from the position **116a** are expressed as "coordinates **A".** Likewise, coordinates in the space **S** as converted from the positions **116b** and **116c** are expressed as "coordinates **B"** and "coordinates **C",** respectively. The CPU **21** generates data of a traveling path along which the AGV **10** travels from the coordinates **A** to the coordinates **B,** and after reaching the coordinates **B,** heads toward the coordinates **C.**

Data of the traveling path may be described according to a predetermined rule. For example, suppose that the user 3 designates a certain marker object, and subsequently another object. For purposes of illustration, the marker object designated first will be referred to as the "first marker object" and the marker object designated next will be referred to as the "second marker object". The traveling path can be determined by: "connection information" representing the second marker object, toward which the AGV **10** is headed next to the first marker object; and "orbit information" representing the shape of the orbit from the first marker object toward the second marker object. In the present disclosure, information such as the above-described "connection information" and "orbit information" that determines the traveling condition of the AGV **10** will be referred to as "attribute information". The above-described connection information and orbit information may be included as part of the attribute information of the first marker object.

As described above, the positions of the first marker object and the second marker object on the image are converted to "first coordinates" and "second coordinates" that are coordinates in the space **S,** respectively. The attribute information of the first marker object includes a pair of an X-axis coordinate and a Y-axis coordinate identifying the first coordinates, and the attribute information of the second marker object includes a pair of an X-axis coordinate and a Y-axis coordinate identifying the second coordinates. The terms "first coordinates" and "second coordinates" are also assigned for purposes of illustration.

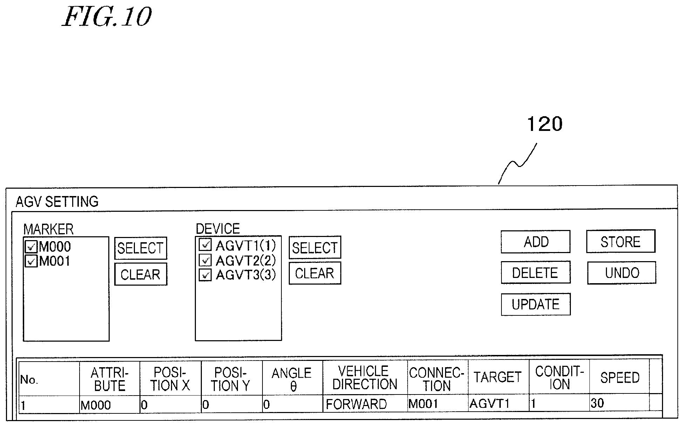

FIG. **10** shows an example of a first image **120** displayed on the monitor **30** after the button object **63d** (FIG. **7**) is selected. The illustrated example shows a list of attribute information of a certain marker object. An example of the attribute information may be as follows: Here, the coordinates in the space **S** obtained by converting the coordinates of a marker object designated next to the marker object in question will be referred to as "coordinates of the next target position" (the same also applies below in the present specification).
- The ID or the name of the AGV that identifies the AGV **10** which is subject to the traveling condition in question.
- The coordinates (x, y) in the space **S** as converted from the coordinates of the marker object in question.
- The angle θ representing the traveling direction of the AGV **10** heading toward the coordinates of the next target position.
- The direction of the AGV **10** ("forward" indicating a forward movement, "backward" indicating a backward movement).
- The information (name, etc.) representing the marker object designated next to the marker object in question.
- The speed of the AGV **10** heading toward the next marker object.

In response the operation by the user **3,** the CPU **21** sets or changes the traveling condition for each AGV **10,** with respect to each marker object that is set as shown in FIG. **9****.**

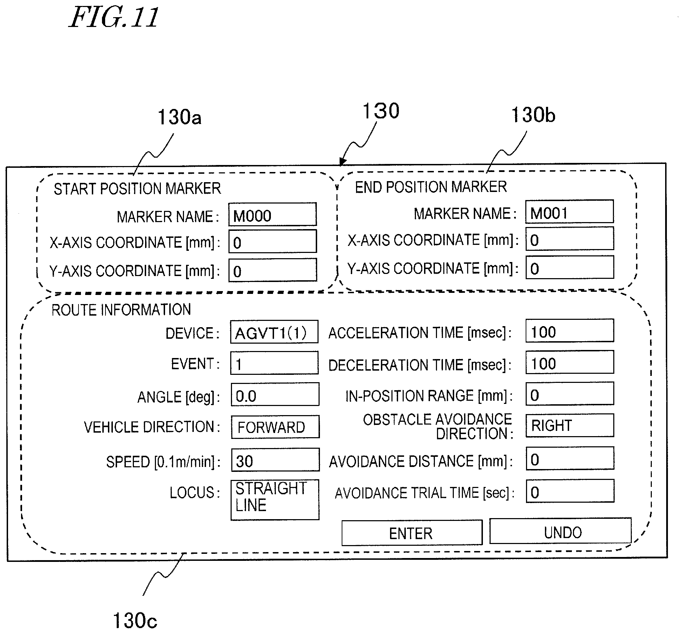

FIG. **11** shows an example of a second image **130** displayed on the monitor **30** after the button object **63d** (FIG. **7**) is selected. The second image **130** can be displayed when a marker object representing the traveling start position of the AGV **10** and a marker object representing the traveling end position of the AGV **10** are set.

The second image **130** includes three areas **130a, 130b** and **130c.** The areas **130a** and **130b** correspond to pieces of attribute information of the marker objects representing the traveling start position and the traveling end position, respectively. Specifically, they are the names of the marker objects and the coordinates (x, y) of the space **S** converted from the coordinates of the marker objects.

The area **130c** shows detailed attribute information related to the traveling path. An example of the attribute information may be as follows:
- The ID or the name of the AGV that identifies the AGV **10** which is subject to the traveling condition in question.
- The angle representing the traveling direction of the AGV **10** heading toward the coordinates of the next target position.
- The direction of the AGV **10** ("forward" indicating a forward movement, "backward" indicating a backward movement).
- The speed of the AGV **10** heading toward the coordinates of the next target position.
- The shape of the locus of the traveling path (a straight line, an arc).
- The acceleration time and the deceleration time of the AGV **10.**
- The in-position range.
- The avoidance direction (right or left), the distance of avoidance and the length of time of avoidance when an encounter with an obstacle is detected.

The above-mentioned "in-position range" means a range (area) within which the AGV **10** may be regarded as having reached the coordinates of the next target position even though the AGV **10** has not quite reached them. The size of the area may be set for each target position. For example, when it is assumed that the area in question is a circular area centered around the next target position, the user **3** may set the value of the radius of the circular area as attribute information. The unit may be, for example, millimeter.

These may also be set as the attribute information: a charging condition specifying whether or not to perform recharging, based on the residual amount of charging and the like; an entrance prohibition condition specifying an area where entrance of the AGV **10** is prohibited; and the like

As an example method of detecting whether the AGV **10** has reached the area in question or not, use of the output of the localization device **14e** (FIG. **4****)** provided on the AGV **10** might be possible. The AGV **10** matches the output of the localization device **14e** against the map data, estimates the best-coinciding position on the map data to be its own position, and determines whether its estimated own position is within the area in question or not.

The user **3** can change the areas **130a, 130b** and **130c** shown in FIG. **11****.** The CPU **21** stores the changed attribute information into the AGV DB **25** (FIG. **6****),** and sets or changes the traveling condition for each AGV **10.**

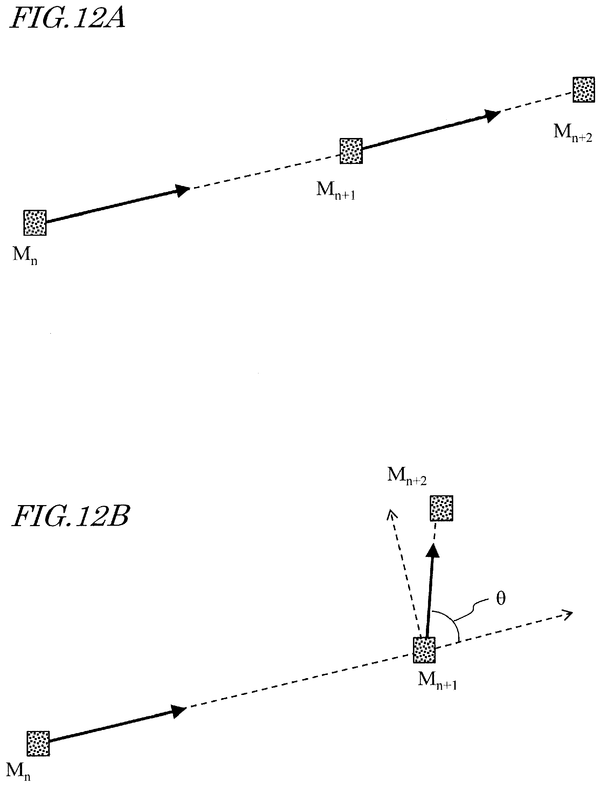

Now, with reference to FIG. **12A** to FIG. **12C****,** the locus of the traveling path of the AGV **10** will be described.

FIG. **12A** shows a traveling path of the AGV **10** when the AGV **10** travels in a straight line. The AGV **10** starts traveling from a position **Mₙ,** and after reaching a position **Mₙ₊₁,** the AGV **10** can continue to move in a straight line to a position **Mₙ₊₂.**

FIG. **12B** shows a traveling path of the AGV **10** when the AGV **10** turns left at the position **Mₙ₊₁** and moves toward the position **Mₙ₊₂.** The AGV **10** starts traveling at the position **Mn,** and at the position **Mₙ₊₁,** rotates a motor situated on the right side of the traveling direction and stops a motor situated on the left side of the traveling direction. Then, the AGV **10** rotates counterclockwise by an angle θ at the position and then, travels in a straight line toward the position **Mₙ₊₂** with all motors being rotated at an equal speed.

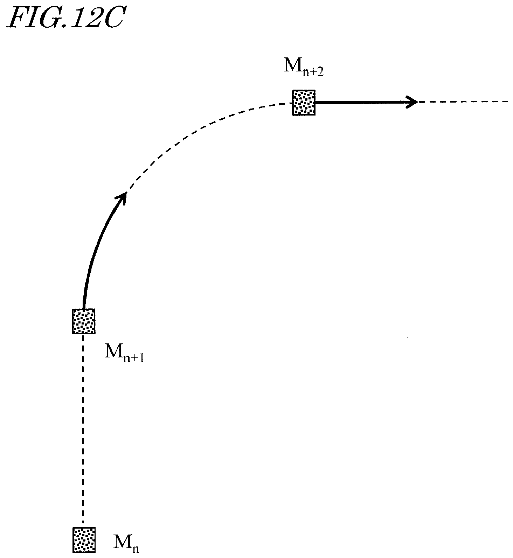

FIG. **12C** shows a traveling path of the AGV **10** when the AGV **10** moves in an arc-shaped line from the position **Mₙ₊₁** to the position **Mₙ₊₂.** After the AGV **10** reaches the position **Mₙ₊₁,** the rotation speed of the motor on the outer side is made higher than that of the motor on the inner side. This enables the AGV **10** to move toward the next position **Mₙ₊₂** along an arc-shaped path.

The driving device **17** causes a relative rotation speed difference between the motors **16a** and **16b** in accordance with the control signal, whereby the AGV **10** can turn or rotate in a direction where the rotation speed is relatively low.

Hereinafter, an example processing of creating a path for the AGV **10,** converting it into a ladder diagram, and outputting it by using the management system **100** as a computer system will be described. In the following, for the sake of convenience, an example in which the AGV **10** travels in a straight line between two positions will be described. That is, the locus of the traveling path is a straight line. However, as mentioned above, the traveling path of the AGV **10** is not limited to a straight movement.

The ladder diagram described below is an example of a "programming language" frequently used in general when a PLC (Programmable Logic Controller) is used. In addition, for example, a flowchart method, a step ladder method, an SFC (Sequential Function Chart) or the like may be used. While these methods are different from one another, by analogy from the following description one of ordinary skill in the art should be able to handle any method so long as an application program of the management system **100** outputs a "program" of an output form supporting the method.

FIG. **13** shows an example of marker objects **118a** to **118d** respectively displayed in positions designated by the user in sequence. It is assumed that the marker objects **118a** to **118d** are arranged in the order by which the user designates them by using the input device **40.** It is assumed that the user creates a traveling path for the AGV **10** so that the AGV **10** will pass the marker objects **118a, 118b, 118c** and **118d** in this order.

When the user designates two positions in sequence to display two marker objects, the computer program according to the present embodiment (hereinafter, abbreviated as "program") generates a path that passes through the two marker objects. That is, the designated positions are meant as passing points of the AGV **10.** Hereinafter, the processing of generating the path will be described in detail. Here, the following description is an example. In another example, the user may designate all positions to display all marker objects, and thereafter, the program may collectively generate a traveling path for the AGV **10** as soon as a "store" button (not shown) displayed on the monitor **30** is selected by the user.

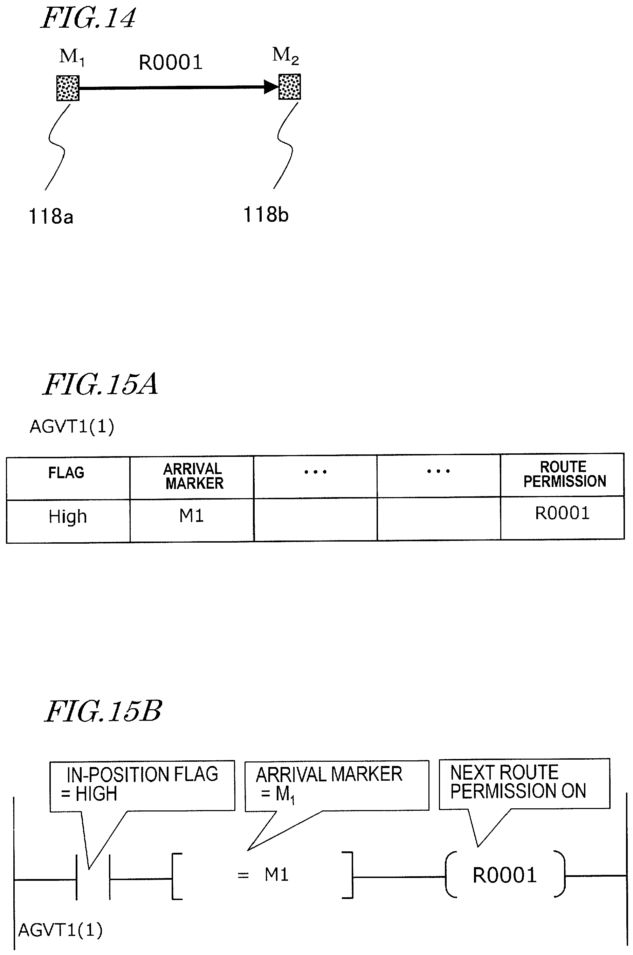

FIG. **14** shows an example in which the marker objects **118a** and **118b** are displayed according to the user's designation, and thereafter a path **R0001** is set by the program. The designation "R0001" is an identifier (ID) that uniquely identifies the path, this designation being assigned by the program. For ease of being handled as data, the marker objects **118a** and **118b** are assigned with designations **M₁** and **M₂,** respectively.

In accordance with the program, the CPU **21** of the travel management device **20** sets the traveling path **R0001** heading from the marker object **118a** toward the marker object **118b.** In addition, the CPU **21** sets a movement permission condition, which is a condition for permitting movement along the traveling path **R0001.**

FIG. **15A** shows an example of the movement permission condition that is set in accordance with the program. The movement permission condition may include various conditions.

In the example of FIG. **15A****,** "High" is set as a "flag". This means that the AGV **10** reaching the in-position range of a predetermined position (marker) is being required as a condition. The marker whose in-position range is to be reached is described in the next column; in this example, "marker M₁" is set. Lastly, the ID of the path for which movement is permitted is described in "ROUTE PERMISSION". Note that, for example, eight such movement permission conditions may be set.

As is understood from the above description, the movement permission condition can be defined as a set of descriptions defining various conditions. The description defining each condition can be regarded as one "statement" in the realm of programming languages. The movement permission condition may be regarded as a "composite statement" that comprises a set of a plurality of statements. A composite statement is not necessarily expressed in the form of a table as shown in FIG. **15A****,** but may be a list of statements. The CPU **21** stores the generated composite statement into the memory **22,** or into the AGV DB **25** (FIG. **6**) for each AGV **10.** The statement may be created in accordance with any arbitrary rule that is interpretable by the CPU **21,** and stored.

The travel management device **20** according to the present embodiment further generates a ladder diagram by using the composite statement. FIG. **15B** shows an example of the ladder diagram generated based on the composite statement of FIG. **15A** and displayed on the monitor **30.**

The CPU **21** disposes, as a contact point (symbol | |) in the ladder diagram, an arrival flag indicating that the AGV **10** is to reach a predetermined position. The CPU **21** disposes an arrival marker **M₁** in between the symbols [ ], as a condition concerning the position information of the "predetermined position". Further, the CPU **21** places the ID (R0001) of the path representing the next traveling path, as a coil (symbol "( )") of the output relay of the ladder diagram. The symbols are connected by lateral lines. The CPU **21** displays the generated ladder diagram on the monitor **30.**

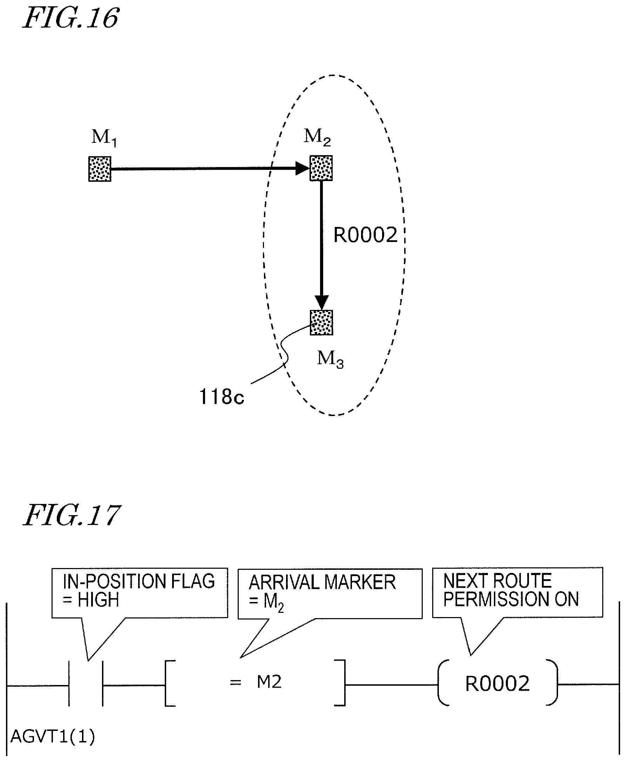

Next, FIG. **16** is referred to.

The user designates the next marker **M₃** by using the input device **40.** Then, a path heading from the second marker M₂ toward the third marker **M₃** is set.

FIG. **16** shows an example in which the marker object **118c** is further displayed according to the user's designation, and thereafter a path of an identifier "R0002" is set by the program. The CPU **21** performs processing similar to that of the previously-described example to generate a composite statement that defines the movement permission condition concerning the traveling path R0002. FIG. **17** shows an example of a ladder diagram, displayed on the monitor **30,** in which the movement permission condition concerning the traveling path R0002 is defined. Since the contents of the composite statement are clear from the description of FIG. **17****,** any description corresponding to FIG. **15A** is omitted from the description of the drawings.

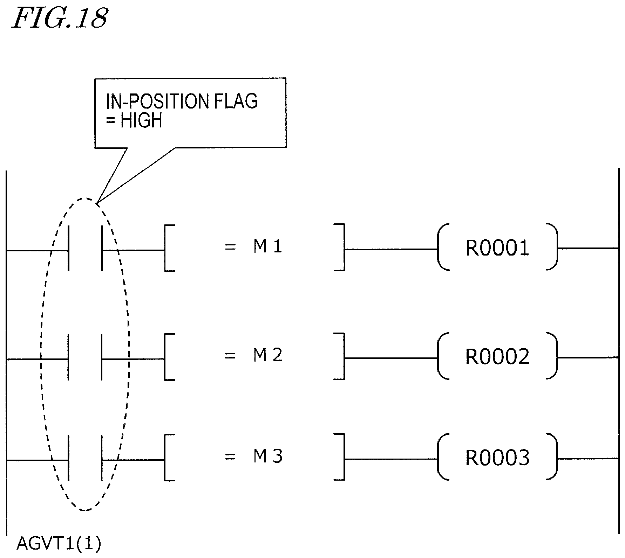

FIG. **18** is a ladder diagram where the movement permission condition to sequentially move the four marker objects shown in FIG. **13** is described. In accordance with the program, the CPU **21** is capable of generating a composite statement defining the movement permission condition for each traveling path, and expressing them in one ladder diagram. In conventional situations where a PLC would be used, such a ladder diagram would be manually created. According to the processing of the present embodiment, the travel management device **20** automatically generates the composite statement, and generates the ladder diagram. The user can significantly reduce the man-hours that were conventionally required.

While the above description illustrates that a straight path connecting between two marker objects is automatically set, the user may arbitrarily specify a path of his or her own. The user is able to clarify his/her intension in setting the path, and may set any arbitrary path which is not limited to a straight line (for example, an arc-shaped path) .

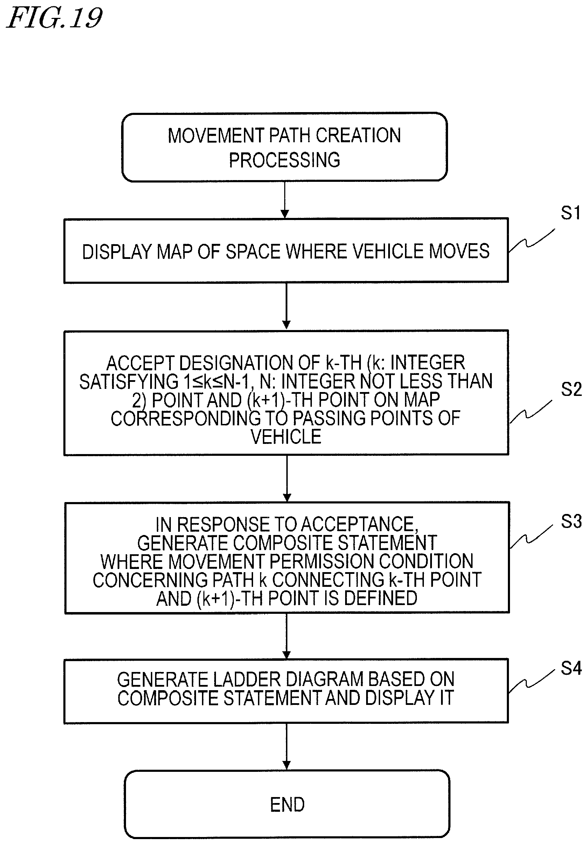

FIG. **19** is an operation flowchart of the travel management device **20** performed by the program according to the present embodiment. FIG. **19** shows it in a generalized form.

At step **S1,** the CPU **21** displays, on the monitor **30,** a map of the space where the AGV **10** moves. At step **S2,** the CPU **21** accepts, from the input device **40,** designation of the k-th (k: an integer satisfying 1≤k≤N-1, N: an integer not less than 2) point and the (k+1)-th point on the map corresponding to passing points of the AGV **10.** At step **S3,** in response to acceptance of the designation, the CPU **21** generates a composite statement which is a set of computer-interpretable statements and in which the movement permission condition concerning the path k connecting the k-th point and the (k+1)-th point is defined. At step **S4,** the CPU **21** displays the composite statement as a ladder diagram on the monitor **30.** Step **S4** is additional processing. Steps **S1** to **S3** may at least be performed.

As is apparent from the description of the embodiment given above, a PLC is not required, while only the travel management device **20** and the application program that executes the above-described processing in the management system **100** may be provided. Not only the cost of a PLC is unnecessary but also it is unnecessary to separately purchase and construct a program development environment or acquire knowledge to create the program. However, a PLC may be provided when an ability to cooperate with an external device is needed.

Next, a method of determining the order of priority among a plurality of movement permission conditions that are simultaneously met will be described. In the present embodiment, where the ID of the path includes digits, it is assumed that a path with smaller digits is to be prioritized over others.

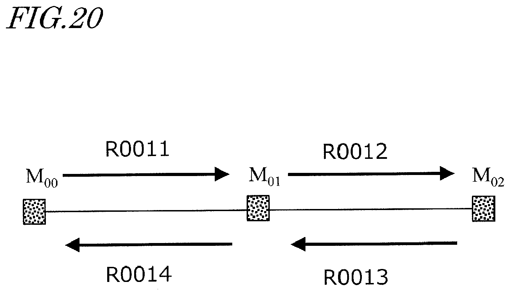

FIG. **20** shows an example of four traveling paths **R0011** to **R0014** passing through three marker objects **M₀₀** to **M₀₂.** The directions of the arrows indicate the traveling directions. Each path connects two adjoining marker objects.

The marker object **M₀₁** is a starting point of the path **R0012,** and also a starting point of the path **R0014.** That is, the paths **R0012** and **R0014** have the same starting position. When the AGV **10** reaches the position corresponding to the marker object **M₀₁,** the movement permission conditions concerning the branch paths **R0012** and **R0014** are simultaneously met. In this case, the AGV **10** prioritizes the path **R0012** having a lower path ID over the path **R0014,** which is ignored. As a result, the AGV **10** having started to move from the M₀₀ toward the path **R0011** travels along the following path:

**R0011 (M₀₀→M₀₁) →R0012 (M₀₁→M₀₂) →R0013 (M₀₂→M₀₁) →R0012 (M₀₁→M ₀₂) →R0013 (M₀₂→M₀₁) →...**

The above-described method, which prioritizes a movement permission condition having a lower path ID, is an example; alternatively, a movement permission condition having a higher path ID may be prioritized. Further, it is only exemplary that the adopted movement permission condition be determined in accordance with the path ID at all; the movement permission condition that is prioritized over others may be determined by using any other criterion.

As describe above, in accordance with the program of the travel management device **20** of the present embodiment, a composite statement can be created, and a ladder diagram can be created from the composite statement. The user can edit the generated composite statement and the like. The travel management device **20** may set an edit permission level, which represents presence/absence of authorization as to whether the edit may be performed or not () for each user.

For example, the CPU **21** generates a composite statement, and then, in response to a depression by the user of the button object **63c** (FIG. **7**) to edit the course, authenticates the user, and reads the data of an edit permission level that is set for the user. Then, the CPU **21** determines whether an edit of the composite statement is permitted or not in accordance with the edit permission level. Note that the information representing whether the edit is permitted or not or the edit permission level may be set for each composite statement, instead of for each user.

An illustrative embodiment according to the present disclosure has been described above.

According to the program of the present embodiment, a virtual program creating function is provided that is capable of outputting a programming language to operate a PLC, e.g., a ladder diagram. By using the output from the program, the affinity with the conventional development environment can be maintained.

Since engineers having already acquired programming skills based on a ladder diagram, etc., can also perform edits by using the edit function, efficient use of human resources can be made. Since the outputted ladder diagram is also usable in any existing PLC-based management systems, efficient use of such existing management systems can also be made. Therefore, according to the present disclosure, the man-hours required for creating and editing a program, such as a ladder diagram, can be significantly reduced.

The technique of the present disclosure is widely usable for controlling the operation of a vehicle.

This application is based on Japanese Patent Applications No. 2018-069761 filed on March 30, 2018, the entire contents of which are hereby incorporated by reference.

## Claims

1. A computer system for creating a path for a vehicle, the computer system comprising:
a processor;
a memory configured to store a computer program that controls an operation of the processor;
an input device configured to accept an operation by a user; and
a display device,
wherein in accordance with the computer program, the processor
(a) displays, on the display device, a map of a space where the vehicle moves,
(b) accepts, from the input device, designation of a k-th (k: an integer satisfying 1≤k≤N-1, N: an integer not less than 2) point and a (k+1)-th point on the map corresponding to passing points of the vehicle, and
(c) generates, in response to the acceptance, a composite statement which is a computer-interpretable statement and where a movement permission condition concerning a path k connecting the k-th point and the (k+1)-th point is defined.

2. The computer system of claim 1, wherein in the composite statement, as the movement permission condition, the path k is defined for which movement is permitted when the following are satisfied: that the vehicle reaches a predetermined position; and that the predetermined position is the k-th point.

3. The computer system of claim 2, wherein the processor generates a composite statement in which a movement permission condition concerning a path m (m: an integer satisfying 1≤k<m≤N-1) different from the path k is defined,
wherein the processor assigns unique ID numbers to the path k and the path m, respectively, when generating the composite statements related to the path k and the path m, and
wherein when the k-th point which is a starting point of the path k and an m-th point which is a starting point of the path m represent the same position, the processor gives higher priority to one of the movement permission condition concerning the path k and the movement permission condition concerning the path m in accordance with the ID numbers.

4. The computer system of any of claims 1 to 3, wherein the processor accepts, from the input device, designation of the path k with the k-th point as the starting point and the (k+1)-th point as an ending point in addition to the designation of the k-th point and the (k+1)-th point.

5. The computer program of any of claims 1 to 4, wherein the processor displays the composite statement as a ladder diagram on the display device.

6. The computer system of claim 5, wherein the processor assigns a unique ID number to each path when generating the composite statement related to the path, and
wherein the processor
sets, as a contact point in the ladder diagram, an arrival flag indicating that the vehicle reaches the predetermined position, and sets position information of a point associated with the predetermined position, and
sets the ID number of the path for which movement is permitted, as a coil of an output relay of the ladder diagram, and displays it on the display device.

7. The computer system of any of claims 1 to 6, further comprising a storage device,
wherein the processor stores the composite statement and the ladder diagram in the storage device.

8. The computer system of any of claims 1 to 7, wherein the processor sets, for the given user, an edit permission level representing an authorization as to whether edit of the composite statement is permitted or not, and
wherein after generating a composite statement in which a movement permission condition concerning at least one path is defined, the processor determines whether the edit of the composite statement is permitted or not in accordance with the edit permission level.

9. The computer system of claim 8, wherein the processor holds information representing whether the edit is permitted or not for each composite statement.

10. A computer program that operates a computer system for creating a path for a vehicle, the computer system comprising a processor, a memory, an input device that accepts an operation by a user and a display device, wherein the computer program causes the processor to
(a) display a map of a space where the vehicle moves, on the display device,
(b) accept, from the input device, designation of a k-th (k: an integer satisfying 1≤k≤N-1, N: an integer not less than 2) point and a (k+1)-th point on the map corresponding to passing points of the vehicle, and
(c) generate, in response to the acceptance, a composite statement which is a computer-interpretable statement and where a movement permission condition concerning a path k connecting the k-th point and the (k+1)-th point is defined.
